# EUROPEAN PATENT APPLICATION

(11) **EP 2 674 081 A1**
(43) Date of publication of application: **18.12.2013**
(21) Application number: 13182507.7
(22) Date of filing: 22.11.2012
(51) Int. Cl.: A47J 31/36

(54) **Infusion group**

(30) Priority: 27.04.2012 IT BS20120073
(62) Divisional of application: 12193899.7
(71) Applicant: Capitani S.r.l., 22070 Solbiate (CO) (IT)
(72) Inventor: Capitani, Gionata, I-22070 Solbiate, COMO (IT)
(74) Representative: Chimini, Francesco

(57) **Abstract**

An infusion group, in particular for a machine for preparing an infused drink by means of a capsule or pod (50) containing an aromatic substance, comprising a female infusor (3) and a male infusor (5), suitable for acting in conjunction with the female infusor so as to close an infusion chamber (4) at least partially.

During the rearward movement of the mobile infusor from the forward position to open the infusion chamber, one of the two infusors inclines to favour the extraction of the capsule or pod from said infusion chamber.

## Description

The present invention relates to an infusion group, for example for coffee machines of the type functioning with pods or capsules containing aromatic essences.

Numerous infusion groups for coffee machines are known of in the art. Such devices usually comprise a male infusor, which supplies an extraction fluid, and a female infusor.

The capsule or pod containing the aromatic essence is transported inside the female infusor, in the so-called infusion chamber so that the extraction of the aromatic essence takes place by means of the male infusor.

To such purpose, sealing means are provided between the male infusor and the female infusor to prevent the extraction fluid from coming out of the infusion chamber.

In particular, it is known of to position a sealing ring on the front surface of the male infusor, facing towards the female infusor, so that this sealing ring acts in conjunction with the outer flange of the capsule or pod which abuts against the rim of the female infusor defining the infusion chamber.

It has been found however that especially when using capsules of a large size, such as those for making hot chocolate, cappuccino, weak coffee etc. the thrust pressures during the infusion are such as to cause leaks of the extraction fluid despite the presence of the front sealing gaskets mentioned above.

To try to overcome such drawback, infusion groups have been proposed wherein a sealing ring is placed in the female infusor. However not even this solution has proved problem-free. In particular, a capsule or pod inserted incorrectly in the infusion chamber may damage the sealing ring; moreover, residues of dust, sugar, coffee or other substances remain inside the infusion chamber even after extraction of the used capsule and may jeopardise the correct functioning of the sealing ring.

In addition, the need to reduce the overall dimensions of the machine for making coffee or other drinks from a capsule or pod, in particular for domestic use, is increasingly felt. In the case of the large-sized capsules mentioned above however this need conflicts with the need to increase the stroke of the mobile infusor so to increase its distance from the fixed infusor when the group is opened and thereby allow the correct movement of the capsule or pod, especially in the extraction phase from the infusion chamber.

One purpose of the present invention is to propose an infusion group of reduced overall dimensions even in the case of use of capsules or pods of a larger size than those traditionally used for coffee.

Another purpose of the present invention is to propose an infusion group able to improve the seal during infusion and at the same time to overcome the drawbacks complained of above.

Such purposes are achieved by means of an infusion group according to claim 1.

Further advantages may also be achieved by means of the additional features of the dependent claims.

Preferred embodiments of the infusion group according to the present invention will now be described in detail with the help of the attached drawings, wherein:

- figure 1 shows a perspective view of a male infusor and a female infusor of an infusion group according to the invention, before the coupling thereof;

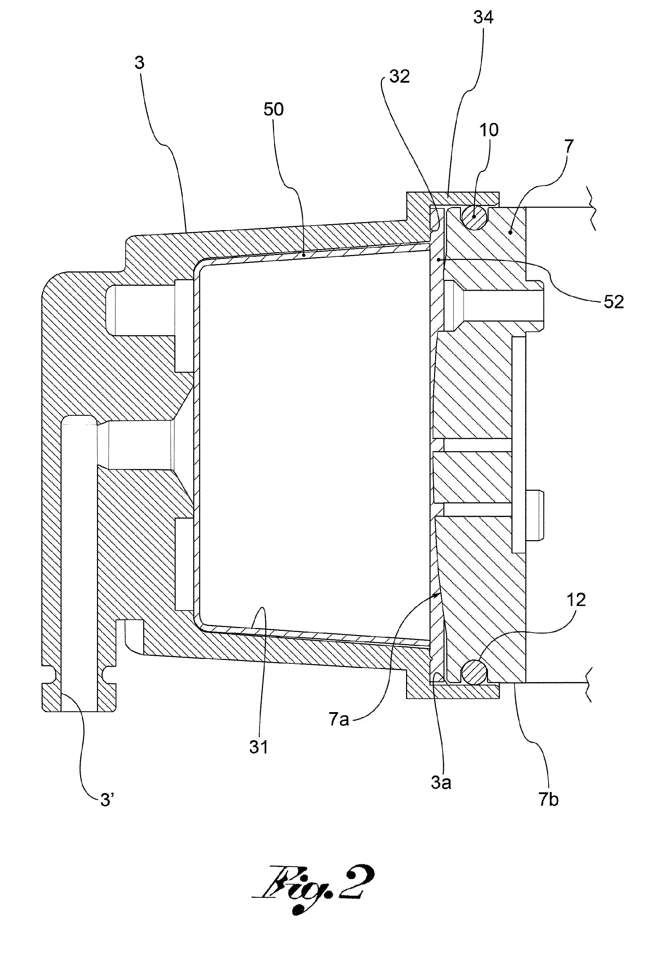

- figure 2 shows, in axial cross-section, a male infusor and female infusor in the closed configuration of the group;

- figures 3 and 3a are two perspective views of an infusion group according to the invention in a first embodiment, in an open configuration, before the insertion of a capsule, and during the closing phase of the group;

- figures 4 to 4c are schematic views of the infusion group in figure 3, in the insertion phases of a capsule;

- figure 5 shows an inner membrane of the dispenser duct of the infusion group;

- figures 6 and 6a are two perspective views of an infusion group according to the invention in a second embodiment, in an open configuration, before the insertion of a capsule, and in the closing phase of the group; and

figures 7 to 7c are schematic side views of the infusion group in figure 6, in the insertion steps of a capsule, closure of the group and reopening of the group for the expulsion of the capsule.

In the continuation of the description, the elements common to the various embodiments of the infusion group will be indicated using the same reference numerals.

With reference to such drawings, reference numeral 1; 100 globally denotes an infusion group, for example for coffee machines of the type functioning with capsules 50 or pods containing aromatic essences.

In one general embodiment, the infusion group 1 comprises a female infusor 3 which defines an infusion chamber 4 suitable to house a capsule or pod 50 for the production of an infused drink, and a male infusor 5, suitable to act in conjunction with the female infusor 3 to at least partially close said chamber 4.

The female infusor 3 and male infusor 5 are supported by a frame 2. For example, said frame 2 has a parallelepiped box-structure which extends mainly along a main axis X which, in a preferred embodiment, may be assumed to be horizontal.

For example, the frame 2 comprises two side plates 16 opposite each other and parallel to the main axis X. The male infusor and the female infusor are placed between and supported by said side plates 16.

At least one of said male 5 and female 3 infusors is a mobile infusor. Said mobile infusor is translatable in relation to the other along a translation axis, at least in part coinciding with or parallel to the main axis X of the frame. The mobile infusor, which in the preferred illustrated embodiment is the male infusor 5, is movable between a rearward, open position and a forward, closed position of the infusion chamber 4.

In the examples shown, the mobile infusor is the male infusor 5, but it will appear evident to a person skilled in the sector that the teaching provided by the present invention may easily also be applied in the case in which the mobile infusor is the female infusor 3 or to the case in which both infusors are mobile, one towards the other.

According to a preferred embodiment, at least one dispenser duct 3' of an infused drink to a cup extends from the female infusor 3.

The male infusor 5 has, on the side facing the female infusor 3, an end portion 7 which comprises a front surface 7a, suitable for coming into contact with the capsule or pod 50, and an outer lateral surface 7b. A sealing element 10 is fitted on said outer lateral surface 7b. The female infusor 3 has an inner wall 3a suitable for acting in conjunction with said sealing element 10 to hermetically close the infusion chamber 4 when the mobile infusor is in the forward position.

Consequently, unlike the infusion groups according to the prior art, wherein the sealing of the infusion chamber is made frontally, that is between the front surface of the male infusor and the pod or capsule, in the infusion group according to the invention the seal is made between the outer lateral surface 7b of the male infusor 5 and an inner lateral surface 3a of the female infusor 3.

Preferably, the sealing element 10 is placed adjacent to the front surface 7a of the male infusor 5.

In one embodiment, the outer lateral surface 7b of the end portion 7 of the male infusor is a substantially cylindrical surface, parallel to the translation axis X.

In a preferred embodiment, the sealing element 10 is an O-ring.

Preferably, moreover, the sealing element 10 is partially housed in a respective annular seat 12 made in said outer lateral surface 7b of the end portion 7 of the male infusor. This way, the sealing element 10 is firmly axially fixed, that is to say it cannot translate axially, when the end portion 7 of the male infusor is inserted in and extracted from the female infusor.

In a preferred embodiment, the female infusor 3 comprises a housing seat 31 of the pod or capsule, and an annular abutment shoulder 32 which surrounds the entrance of said seat 31 and on which an annular rim 52 of the capsule or pod 50 is suitable for resting. An end collar 34 extends from said annular shoulder 32 suitable for receiving with a shaped coupling the end portion 7 of the male infusor so as to act in conjunction with the sealing element 10.

In other words, said end collar 34 at least partially overlaps the end portion 7 of the male infusor, surrounding it peripherally.

Preferably, moreover, when the male infusor 5 closes the infusion chamber 4, the sealing element 10 finds itself in a rearward position in relation to the end rim of the collar 34 of the female infusor, so as to ensure the seal even in the case in which, on account of the high pressures of the extraction fluid, the two infusors tend to separate.

Consequently, the fact of having moved the sealing element from the front surface of the male infusor to the lateral surface means that the sealing element works on the inner lateral wall of the female infusor, ensuring the seal even in the case of high thrust pressures of the extraction fluid, which would tend to separate the front surface of the male infusor from the capsule or pod.

In addition, having to work between two flat and continuous surfaces, the sealing element may be made with a simple O-ring, rather than a special profile gasket such as those used on the front surface of the male infusor.

The sealing element placed on the male infusor is not soiled by residues of dust, sugar, coffee or other substances which remain stuck to the female infusor, does not get damaged and is easy to clean or replace.

The infusion group 1 comprises manually operable drive means to move the mobile infusor. In a preferred embodiment, said drive means comprise a toggle lever 20.

In one embodiment variation, the drive means of the male infusor 5 comprise a cam lever.

Advantageously, the drive means are assisted in the return movement for opening the group by an elastic element, such as a return spring 21 wound around the rotation pin of the toggle lever 20. In the absence of such elastic element, the infusion group 1 would tend to close again making the insertion of the capsule 50 difficult.

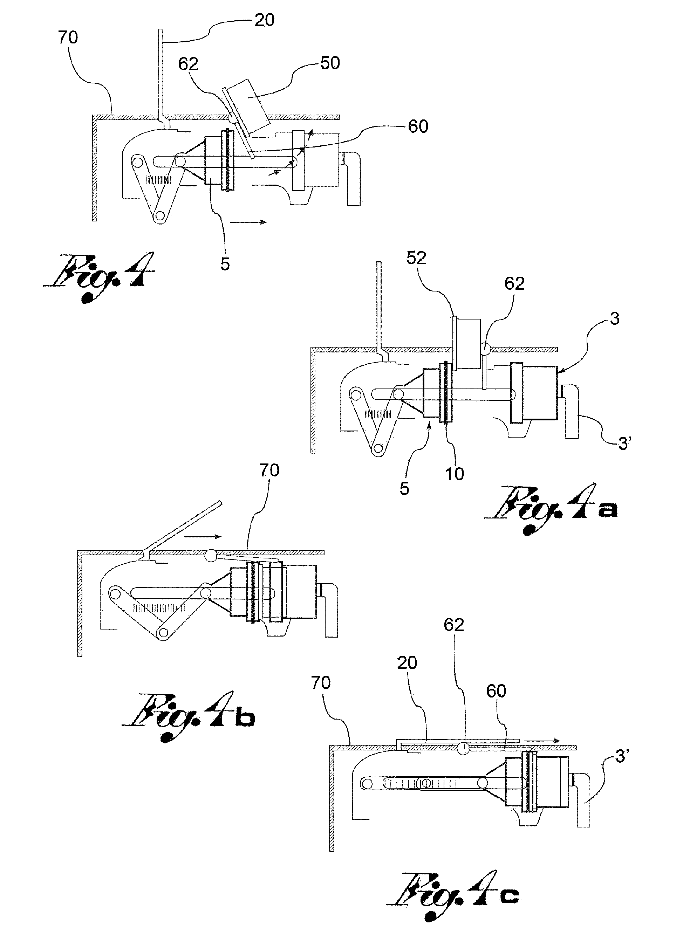

According to another aspect of the invention, shown in figures 4-4c, the capsule 50 is inserted in the infusion chamber with the help of a tilting insertion chute 60. In one embodiment shown in figure 4, said chute 60 is, in the rest position, inclined towards the female infusor 3 so that the capsule 50 rests contemporarily on the chute 60, with its front side, and on the end collar 34 of the female infusor 3, with its rear portion.

In the embodiment variation in figure 4a, in the rest position, the tilting chute 60 is in a substantially vertical position so that when the group is open, the capsule 50 is held between the front surface 7a of the male infusor and the facing surface of the chute 60.

In both these embodiments, when the male infusor 5 moves forward, the chute 60 swivels around its rotation pin 62 so as to adopt a substantially horizontal position, allowing the male infusor 5 to push the capsule 50 into the capsule seat 31 (figures 4b and 4c).

According to a preferred embodiment, said tilting insertion chute 60 is hinged to the casing 70 of the machine housing the infusion group. Thanks to such connection to the casing 70, rather than to the frame of the group, as happens with some prior art groups, the chute 60 is easier to dismantle for maintenance or replacement. In addition, for large-sized capsules 50 which require longer group opening and closing strokes, the application of the chute to the casing permits an increase in the length of said chute.

According to a preferred embodiment, in at least one of the facing surfaces of the chute 60 and the mobile infusor are performed projections, for example in the form of ribs, acting as a spacer so that, during the reopening of the group at the end of the infusion step, the free end of the chute lowers between the male infusor and female infusor with a certain delay in relation to the rearward movement of the mobile infusor. This way, the return of the chute to the starting position is prevented from interfering with the expulsion of the used capsule from the infusion chamber.

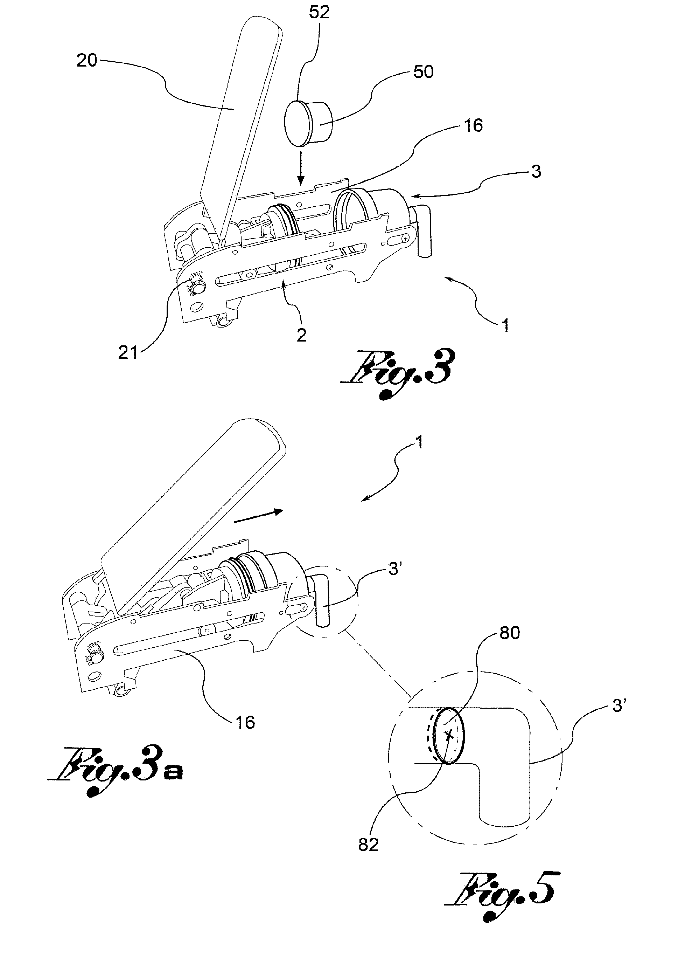

According to a further aspect of the invention shown in figure 5, in order to cream the coffee produced by the infusion, a hermetic membrane is placed in the dispenser duct 3' having one or more cross-shaped incisions 82 so as to form a calibrated stricture which allows an increase in the exit speed of the drink, nebulising it and mixing it with air more efficiently to permit an improved emulsion. In particular, the cross-shaped incision 82 is suitable for allowing a vibration of the aperture and greater opening flexibility, that is to say an aperture depending on the density of the drink coming out and in any case suitable for allowing residues of dust and coffee which could obstruct the membrane passage, to pass through it.

The functioning of the infusion group according to the invention is as follows.

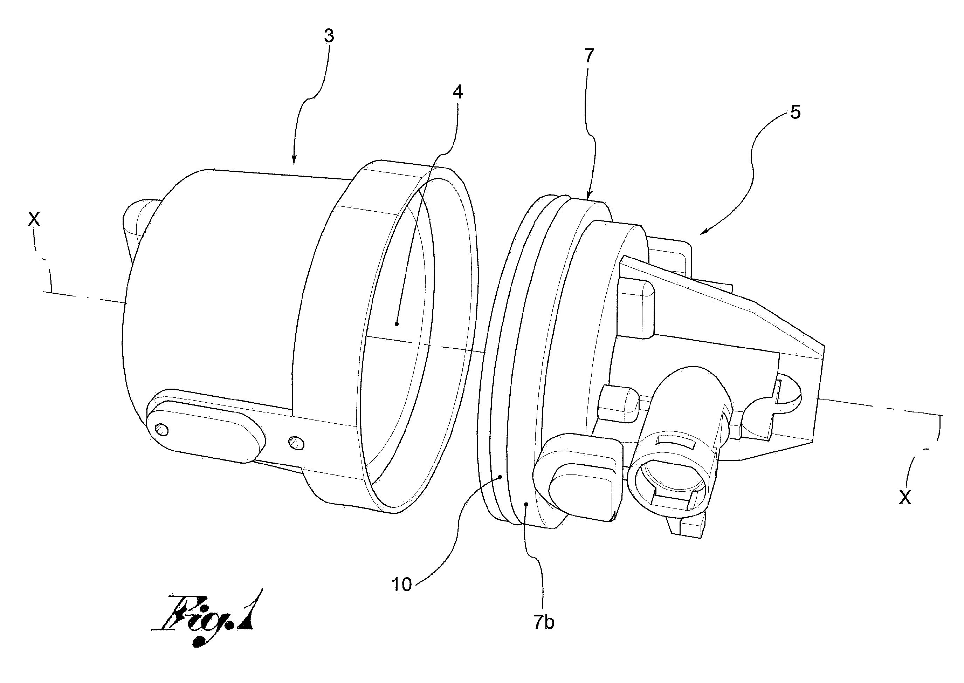

Initially, the infusion group 1 is in an open configuration (figures 1 and 3), that is to say with the male infusor 5 and the female infusor 3 distanced from each other so as to open the infusion chamber 4 and permit the insertion of a capsule or pod 50 in the open group.

The capsule or pod 50 is held in a position facing the entrance of the infusion chamber 4 by means of suitable supporting means (not shown).

The mobile infusor is then pushed towards the other infusor, so that the capsule or pod 50 enters the infusion chamber 4, resting its peripheral rim 52 against the annular abutment shoulder 32. At this point the group is closed and the sealing element 10 of the male infusor acts against the inner side wall 3a of the female infusor 3. As a result, the infusion of the aromatic substance contained in the capsule or pod may take place by making an extraction fluid, such as water, coming out of the front surface 7a of the male infusor 5 flow through said capsule or pod.

After dispensing the drink, the group can be reopened by distancing the male infusor from the female infusor. Expulsion means, such as a spring provided on the bottom of the infusion chamber, cause the automatic expulsion of the used capsule or pod from the infusion chamber, for example making it fall into a collection drawer of used capsules or pods.

In the embodiment shown in figures 3, 3a and 4-4c, the translation of the mobile infusor is guided so as to perform a rectilinear movement along a translation axis substantially coinciding with or parallel to the main axis X of the frame of the infusion group.

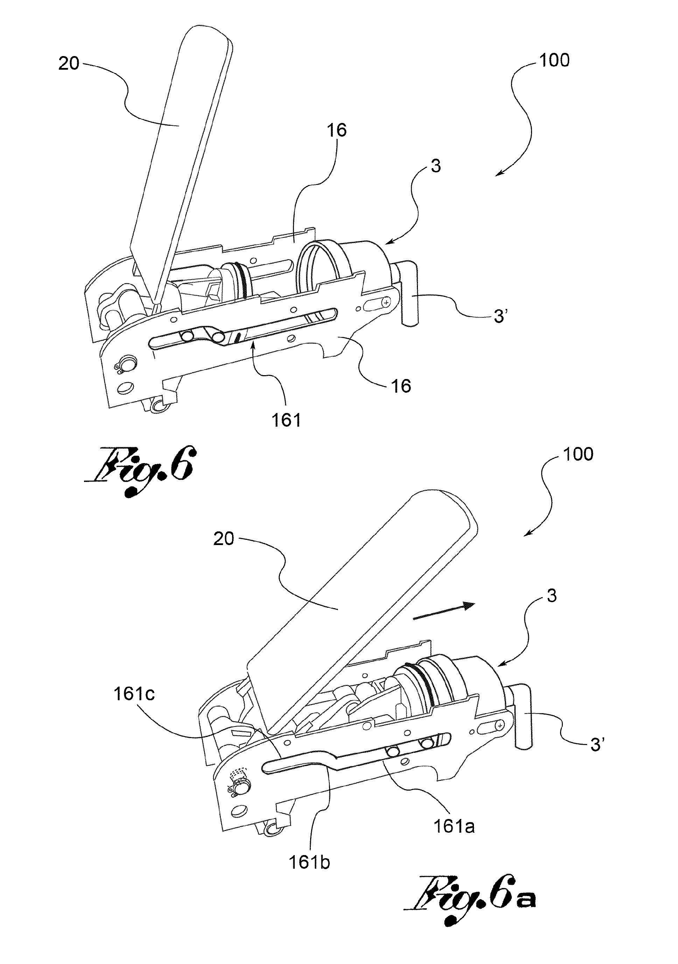

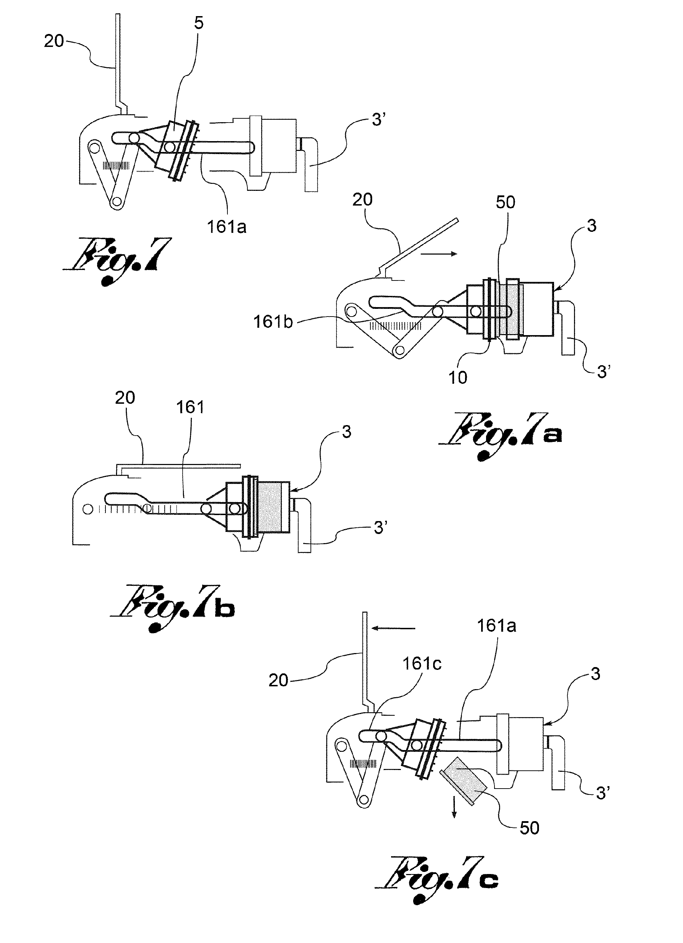

In one embodiment variation shown in figures 6, 6a and 7-7c, whereas when the group is closed the male infusor and the female infusor are aligned along said main axis X, after opening of the group following the extraction of the infused drink, one of the two infusors, for example the mobile infusor, inclines in relation to said main axis X, for example downwards or upwards in the case of the axis X being oriented horizontally, to favour the extraction of the capsule or pod from the infusion chamber.

In the embodiment shown, the infusor which inclines is the mobile infusor, preferably the male infusor 5 during its rearward movement from the forward position to the rearward position.

In a preferred embodiment, the inclination of the mobile infusor is given by the configuration of the guide slots 161 made on the side plates 16 and which slidingly support the mobile infusor. In particular, said guide slots 161 have a first section 161a, facing the infusion chamber, substantially rectilinear and parallel to the main axis X of the frame, and a second section 161b inclined upwards (or downwards if the extraction of the capsule is performed from above) in relation to said main axis X when the mobile infusor moves towards the rearward position.

Thanks to such inclination of the infusor, after opening the infusion chamber, an increased space between the two infusors is obtained, the position of the mobile infusor remaining the same. Such increased space permits, in the case of extraction downwards, falling of the used capsule into the underlying collection drawer - not shown - without sticking or interference. Consequently, advantageously, the same overall dimensions of the infusion group along the main axis X can be maintained even in the case of large-sized capsules.

In a preferred embodiment, the guide slots 161 end at the back with a third section 161c substantially horizontal, which allows the mobile infusor to remain in the rearward rest position.

In a preferred embodiment, the inclination of the inclinable infusor takes place when the distance between the two infusors is smaller than the thickness or depth of the capsule 50 (or, equivalently, of the depth of the infusion chamber) hence measured between the faces respectively facing the mobile infusor and the fixed infusor. Such expedient makes it possible to promote detachment of the capsule 50 from the mobile infusor in the case in which, for example on account of the perforating tips which such infusor is fitted with or of the residue of the aromatic substance which produces a gluing effect, the capsule 50 should remain attached to the mobile infusor on opening the group. In fact, on account of the inclination of the infusors, an interference is created between the capsule 50 and the infusion chamber, which contrasts the inclination of said capsule integral with the mobile infusor as far as causing its detachment therefrom.

It is to be noted that, the group shown in figures 6 and 6a may also be fitted with the capsule insertion chute 60 described above.

A person skilled in the art may make modifications, adaptations and replacements of parts with others functionally equivalent to the infusion group described above so as to satisfy contingent requirements, while remaining within the scope of the following claims. Each of the features described as belonging to a possible embodiment may be performed independently of the other embodiments described.

## Claims

1. Infusion group, in particular for a machine for preparing an infused drink by means of a capsule or pod (50) containing an aromatic substance, comprising:
- a female infusor (3), defining an infusion chamber (4) suitable for receiving a capsule,
- a male infusor (5), suitable for cooperating with said female infusor so as to at least partially close said infusion chamber (4),
wherein at least one of said male (5) and female (3) infusors is a mobile infusor, movable in relation to the other between a rearward open position and a forward closed position of the infusion chamber,
and wherein the male infusor (5) and the female infusor (3) are aligned long a main axis (X) when the mobile infusor is in the forward position,
**characterised in that** the male infusor has, on the side facing the female infusor, an end portion (7) on the outer lateral surface (7b) of which a sealing element (10) is fitted, and wherein the female infusor has an inner wall (3a) suitable for acting jointly with said sealing element to hermetically close the infusion chamber when the mobile infusor is in the forward position.

2. Infusion group according to claim 1, wherein the male infusor has a front surface (7a) suitable for acting in conjunction with the capsule or pod, and wherein said sealing element (10) is positioned adjacent to said front surface.

3. Infusion group according to claim 1 or 2, wherein said outer lateral surface (7b) is a substantially cylindrical surface, parallel to the main axis (X).

4. Infusion group according to any of the previous claims, wherein said sealing element (10) is an O-ring.

5. Infusion group according to any of the previous claims, wherein the sealing element (10) is partially housed in a respective annular seat (12) made in said outer lateral surface (7b).

6. Infusion group according to any of the previous claims, wherein the female infusor comprises a housing seat (31) of the capsule or pod, an annular abutment shoulder (32) which surrounds the entrance of said seat and on which an annular rim of the capsule or pod is suitable for resting, and an end collar (34) which extends from said annular shoulder and which is suitable for receiving with a shaped coupling said end portion of the male infusor so as to act in conjunction with the sealing element.

7. Infusion group according to any of the previous claims, wherein, during the rearward movement of the mobile infusor from the forward position to open the infusion chamber, one of the two infusors inclines in relation to said main axis (X) to promote the extraction of the capsule or pod from said infusion chamber.

8. Infusion group according to the previous claim, wherein the inclinable infusor is the mobile infusor, the inclination of the mobile infusor being given by guide slots (161) which slidingly support the mobile infusor, said guide slots (161) defining a first section (161a), facing the infusion chamber, substantially rectilinear and parallel to the main axis (X) of the frame, and a second section (161b) inclined in relation to said main axis (X).

9. Infusion group according to the previous claim, wherein said guide slots (161) end at the back with a third section (161c) substantially parallel to the first section (161a), which permits the mobile infusor to remain in the rearward position.

10. Infusion group according to any of the previous claims, wherein the inclinable infusor is guided to incline when the distance between the two infusors is smaller than the thickness or depth of the capsule (50).

11. Infusion group according to any of the previous claims, comprising a tilting insertion chute (60) suitable for favouring the insertion of the capsule (50) in the infusion chamber, said chute (60) swivelling around its own rotation axis (62) between a capsule insertion position, substantially vertical or inclined, and a substantially horizontal position, following closure of the group, said tilting insertion chute (60) being hinged to the casing (70) of the machine housing the infusion group.

12. Infusion group according to the previous claim, wherein projections are made in at least one of the facing surfaces of the chute (60) and the mobile infusor, for example in the form of ribs, acting as a spacer so that, during the reopening of the group at the end of the infusion step, the free end of the chute lowers between the two male and female infusors with a delay in relation to the rearward movement of the mobile infusor.
